# EUROPEAN PATENT APPLICATION

(11) **EP 1 990 969 A1**
(43) Date of publication of application: **12.11.2008**
(21) Application number: 07009310.9
(22) Date of filing: 09.05.2007
(51) Int. Cl.: H04L 29/06, H04L 12/22

(54) **Method for data communication and device as well as communication system comprising such device**

(71) Applicant: Nokia Siemens Networks Oy, 02610 Espoo (FI)
(72) Inventor: Abendroth, Jörg, 81737 München (DE); Marhöfer, Michael, Dr., 82041 Deisenhofen (DE); Schäfer, Manfred, 85661 Forstinning (DE)
(74) Representative: Bruglachner, Thomas E.

(57) **Abstract**

A method and a device are provided for data communication between a first instance and a second instance comprising the steps of (i) the first instance sends a request to the second instance; (ii) the second instance sends a response comprising a policy; and (iii) the first instance sends a policy related information to the second instance.

## Description

The invention relates to a method for data communication and to a device as well as to a communication system comprising such a device.

A user or customer wanting to exploit a particular service that may be independent from his or her actual network is confronted with numerous processes that are required for service access control (e.g., registration, network affinity, identification, authorization, payment, privacy, policy negotiation).

This repeatedly applies if the user connects to different services, each of which requiring him to fulfill individual service access prerequisites. Such services all may have own expectations on the user's trust values and its respective environment before accepting an alien user.

On the other hand, the user himself/herself may have own requirements as how services should treat his/her privacy and trust data. Expectations with regard to such privacy issues are growing on both sides, at the provider of a service as well as at the user. This is in particular relevant when it comes to high value services including or related to (significant) cash flow or exchange of valuable tokens that bear an enormous need for proven and trustworthy multi-service environments.

All this gets even more complicated if the parties involved do not know each other beforehand and in particular do not know who (reliable or not?), with what intention (malicious or not?) and with what kind of equipment (capable of viewing secure content, latest software version?) a communication partner is connecting.

The object is to overcome the disadvantages as stated before and in particular to provide an approach to ensure a trustworthy basis for a communication to rely on.

This problem is solved according to the features of the independent claims. Further embodiments result from the depending claims.

In order to overcome this problem a method is provided for data communication between a first instance and a second instance comprising the steps:
- the first instance sends a request to the second instance;
- the second instance sends a response comprising a policy;
- the first instance sends a policy related information to the second instance.

It is to be noted that policy in particular comprises information related to the terms of a negotiation as well as, e.g., to terms of a security setup that may apply after said negotiation

It is further to be noted that the request sent by the first instance may comprise at least a portion of a policy suggested by the first instance to the second instance. In such case, the response comprising the policy conveyed by the second instance could be a confirmation to this policy suggested and/or it could comprise further details or supplement policy suggested.

The policy tells the first instance, e.g., which kind of information and what kind or level of security, what kind of trust relationship and/or what kind of capability has to be provided by the first instance in order to obtain an answer from and/or to get accepted by the second instance to the request sent before.

This approach advantageously allows a common concept of data exchange or communication that is policy based depending upon particular demands of the parties communicating. The first instance provides the policy related information thereby allowing the second instance to respond to the first instance's initial request.

It is to be noted that the data communication may comprise any kind of (user) data or voice (data). It also comprises but is not restricted to (protocol) information and/or data and/or program(s) exchanged that may be used for negotiating a further (data) communication.

It is an embodiment that the second instance sends a response to the request of the first instance. In particular, such request can be fulfilled by providing required information (e.g., user data) to the first instance.

One example is that the first instance and the second instance conclude a business or negotiate an agreement: In such case, the first instance requests particular information (e.g., subject-matter of such contract, deal or agreement) from the second instance. The second instance before even referring to this kind of information as such, provides a response comprising the policy, e.g., information and conditions that are required for that particular sort of contract, deal, acceptance or agreement: As an example, this policy may comprise an indication towards a level of confidence that is required from the first instance, an authentication of the first instance, a security, trustworthiness and/or creditworthiness of the first instance. Due to the policy sent by the second instance, the first instance knows what kind of information needs to be provided in order to conclude the deal or agreement and hence conveys the particular information (i.e. "policy related information") to the second instance. As a subsequent step, the second instance may, e.g., conclude the deal and send the information required.

It is to be noted that the policy negotiation, i.e. the response comprising the policy as provided by the second instance as well as the policy related information sent by the first instance to the second instance, may comprise additional steps, e.g., several policy relevant pieces of information may be requested by the second instance according to a predefined order. Hence, the communication to negotiate the policy and to meet requirements of the second instance may as well comprise several messages sent forth and back between the first instance and the second instance.

In another embodiment, the policy related information comprises a level of confidence that is required by the second instance to act according to the (initial) request of the first instance.

In a further embodiment, the level of confidence is provided by an user of the first instance.

In such case, the user has to provide the according level of confidence, e.g., authentication of himself or herself.

In yet another embodiment, the level of confidence is provided by the first instance itself.

This is in particular advantageously as, e.g., a device can provide information that it may not be corrupted or that no uncertified software is running on such device and therefore, the device can be trusted by the second instance. However, the device may provide such information by sending, e.g., a hash value generated across its software running and/or installed thus showing to the second instance (which compares this hash value with a predefined value for a "clean" device) that the first instance has not been corrupted by malware.

Of course, both approaches can be combined, i.e. the user as well as the first instance may contribute to a level of confidence that is required by the second instance.

In a further embodiment, the method comprises the following steps prior to executing the step of sending the policy related information from the first instance to the second instance:
- the first instance send a request that is related to the policy sent by the second instance to a third instance;
- the third instance provides the policy related information to the first instance.

This is in particular of advantage if the policy conveyed by the second instance indicates that a certain level of confidence is required that may not be generated solely by the first instance itself. In such case the second instance indicates that a third instance is necessary that can be trusted preferably by both instances. With such third instance it is possible for the first instance to provide the policy related information that has been obtained from the third instance upon request. As an example, the third instance may help to confirm authentication, trustworthiness and/or creditworthiness of the first instance to the second instance. This concept may also apply vice versa, i.e. symmetrically: The third instance may also help to confirm authentication, trustworthiness and/or creditworthiness of the second instance to the first instance. It is in particular possible that both such paths are used during one reciprocal authentication mechanism.

The third instance may in particular provide a mediation functionality between the first instance and the second instance.

It is an option that based on the level of confidence required by the second instance, the second instance can ask the first instance to provide such level of confidence (e.g., via authentication of the first instance's identity and/or trust/security parameters as well as other properties) with the help of the third instance. In particular, such requirement can be indicated by the second instance within the policy that is conveyed to the first instance.

The policy related information may comprise at least one of the following:
a) A token: The token can be used to be directly forwarded from the first instance to the second instance. Based on the policy that is sent or forwarded by the first instance to the third instance, the third instance compiles the token that meets the demands of the first instance. The rules as how such token has to be compiled may be negotiated between the third instance and the second instance in advance or during such communication. Advantageously, the first instance does not need to know anything about the token or as how it is to be compiled, it just sends it upon reception from the third instance to the second instance.
b) An attribute: In principle, each kind of data can be used for the purpose described, i.e. forwarding policy relevant information to the second instance.
c) A certificate: A certificate can be forwarded in order to prove, e.g., identity of the first instance to the second instance.
d) A set of claims may be used to confirm the identity of the first instance.
e) A time and/or a time stamp may be used to confirm the identity of the first instance and/or to confirm a validity period.
f) A program to be run on the first instance: The information provided by the third instance may be a program and/or an applet that is installed or runs on the platform of the first instance. As the first instance trusts the third instance, it allows the third instance to execute a program and/or to manipulate its software. This can be used to directly communicate with the second instance according to the policy set forth.
g) Parameters of a program to be run on the first instance: It may also be a solution to only provide parameters to the first instance, said parameters are used by a program, applet of function executable on the first instance. Transferring a predefined set of at least one parameter may result in executing a particular function at the first instance.
h) Information obtained from at least one device management server that is associated with the third instance: Upon receiving the policy from the first instance, the third instance may search within at least one management server available for information relating to, e.g., the hardware and/or the software of the first instance. This information can be used to manipulate the software and/or the hardware of the first instance according to the policy provided. However, as the first instance trusts the third instance, it can allow the third instance to manipulate its hardware/software as deemed necessary. In order to find the according information related to the first instance's hardware and/or software, the third instance may request the necessary information explicitly from the first instance by a separate message; alternatively, this information can be included by the first instance when forwarding the policy to the third instance.
   In addition, the second instance may provide information regarding the kind of software to be run on the first instance. This software can be supplied by the third instance, e.g., via the at least one device management server.
i) Information provided by the second instance offline or online: The second instance may provide information to the third instance that can be used for compiling the policy related information according to a particular policy. Such information can be provided offline and/or online. It can in particular be provided during operation of the method as described, i.e. the third instance may send a request to the second instance that request being answered accordingly and then the policy related information is conveyed from the third instance to the first instance.
   Also contracts or negotiation terms may be subject to a policy.

It is to be noted that combinations thereof or with additional pieces of information can be used in order to meet the level of confidence required by the second instance.

It is an embodiment that the third instance is a trusted party to the first instance and to the second instance.

In another embodiment, the method comprises the step:
- the first instance sends data comprising a policy to be met by the second instance.

Hence, the first instance may send information comprising the policy or related to such policy obtained from the second instance to the third instance.

In a further embodiment, the policy related information comprises information provided by the third instance without revealing any information, e.g., an identity, of the first instance.

This advantageously allows to successfully conclude negotiations between the first instance and the second instance without even producing the identity of the first instance to the second instance. Hence, by support of the third instance it is possible for the first instance to remain anonymous to the second instance.

In yet another embodiment, the third instance is a trusted entity, in particular trust company or a trust center.

It is also an embodiment that the response sent by the second instance comprises data provided by the third instance.

Thus, the second instance may compile its policy by information obtained from the third instance.

In a next embodiment, the policy related information provided by the third instance is provided by at least one further instance.

Such further instance can be a device management server or any other instance or entity that in particular can be federated by the third instance.

It is another embodiment that the first instance is reconfigured according to the policy related information obtained by the third instance.

Hence, it is possible to reconfigure or set up the first instance according to particular requirements set forth by, e.g., the second instance, via configuration data to be loaded in and run by the third instance.

According to a next embodiment, the first instance and/or the second instance can be of the following type:
- a smart card;
- a chip card;
- a user equipment;
- a user terminal;
- a mobile phone;
- a machine setup and left at a location by a user;
- a mobile computer;
- a personal digital assistant;
- a computer connected to a wired or wireless network;
- an IP telephone.

The smart card and/or the chip card may in particular obtain the energy required for its operation via Near Field Communication (NFC). Such cards may be used for ticketing, accounting applications, point of sales or the like.

It is to be noted that the wireless network may comprise Near Field Communication (NFC).

It is also an embodiment that the first instance or the second instance is a producer of a service, in particular a service provider.

It is further an embodiment that the first instance also requires a level of confidence from the second instance. Hence, the second instance may respond to a policy message sent by the first instance similar as described above, i.e. respond on its own or contact the third instance in order to obtain data to be used for providing the policy related information to the first instance. This is in particular applicable if the first instance needs to be sure that the second instance can be trusted as well.

According to yet a next embodiment, the method is used to conclude a bargain or deal or to negotiate conditions or an agreement between the first instance and the second instance.

The problem stated above is also solved by a device comprising at least one processor unit that is arranged and/or equipped such that the method as described herein is executable on said at least one processor unit.

It is an embodiment that said device is a communication device, in particular a device of the following type:
- a smart card;
- a chip card;
- a user equipment;
- a user terminal;
- a mobile phone;
- a machine setup and left at a location by a user;
- a mobile computer;
- a personal digital assistant;
- a computer connected to a wired or wireless network;
- an IP telephone.

Further, the problem stated above is also solved by a communication system comprising the device as described herein.

Embodiments of the invention are shown and illustrated in the following figures:
- Fig.1: shows a block diagram comprising two instances that can be used for data communication;
- Fig.2: shows a block diagram based on Fig.1, wherein an additional third instance acts as a trusted party;
- Fig.3: shows a diagram comprising a trust provision scheme with information flow between a service, a client and a virtual trust provider;
- Fig.4: shows a chart comprising trust support entities;
- Fig.5: shows a diagram based on Fig.3 comprising an additional service leading as an example of a trust federation;
- Fig.6: shows a message chart comprising two services, a client and a virtual trust provider building a trust federation, wherein messages are sent to authenticate the user over the second service with the help of the first service.

The approach described herein in particular refers to Trust Policy Based Service Access Control (TPSAC) in an open (e.g. IP-based Internet) service environment.

Accordingly, methods enabling management, negotiation, and usage of Policy Based Trust Federation for services are described herein. This can be perceived as a supplement to methods of identity federation, thereby enabling measurable "trust" (into involved entities) and policy based negotiation and access control mechanisms.

The term "trust" in this context comprises in particular security relations between different entities that are based on "trusted devices", in particular relating to the context of the Trusted Computing Group (TCG) standardization organization.

Also, principles in relation to Trusted Network Connect (TCG-TNC) are provided. However, the approach presented herewith is in particular related to a service centric view and an open, user controlled and federated environment.

Also, this approach relates in particular to "trusted business relations" between business partners that are assured by trust mechanisms such as organizational frameworks and contracts, in particular by technical means. Technologies that allow negotiating security mechanisms are known (e.g. WS-Policy in conjunction with other Web Service technologies, privacy policies as provided by, e.g., Platform for Privacy Preferences P3P). However, such approaches lack any measured and managed "trust" issues.

The approach presented herewith in particular deals with the issue of a (Virtual) Single Point of Trust-Management. Preferably, a Single Point of Trust (SPOT) is used in order to get an all-mediating-by-one solution. Such Single Point of Trust is referred to as "virtual", because advantageously several instances may need to cooperate. However, security and privacy issues may have to be respected in a reliable manner. The virtual SPOT needs to be trustworthy to itself, due to its central responsibility in the overall trust mediation, provisioning, and management process. This can be based on contracts or technical means and accurately it may be solved by accompanying security architectures.

Issues of bilateral (or multilateral) relationships could be solved if both parties expressed their wishes in terms of policies and negotiate the conditions before granting/accepting service access. The approach provided herein advantageously presents an unified and all-covering solution thereto.

Basic trust issues concern credentials can be assigned to a user and/or to a user's device. Different solutions may need to be supported, in particular for users coming from heterogeneous networks and/or users operating with different equipment.

User equipment reliably has to be checked and, if requirements to access the service (e.g., because of non-accepted equipment, or violation of policies) are not fulfilled, trust management processes may be required.

As an example, such trust management process can check device capabilities or a command can be conveyed to the device for configuration purposes (e.g., "enable Java Script") or trust values of the device can be checked ("attestation", negotiated policies). In a more complex scenario, a trust management process can include extended remote device management (e.g., to prepare and to securely bind necessary credentials to a state of the system or to enable secure software download). Also deactivation, revocation and risk control (e.g., to prevent misuse of stolen devices) is a trust-management issue that can be taken care of.

This approach allows a service (by use of SPOT and trust federation) to utilize, e.g., Trusting Computing Group TCG (or other trust mechanism), without relying on a specific access technology.

In closed environments (e.g., in a mobile network) the mobile network operator attends to charging and billing. However, this is mostly restricted to network services and it is only supporting own (or roaming) subscribers of the respective mobile network operator (connecting via, e.g., xSIM/3GPP mobile devices).

This approach also provides a federation of trust data (i.e. integrating trusted computing mechanisms into federation principles) as well as trust management.

Furthermore, this approach may extend some TCG components, it may in particular use them in the context of a unified service access control mechanism.

Also, this approach allows to incorporate (but is not restricted to) General Authorization (GA) assertions.

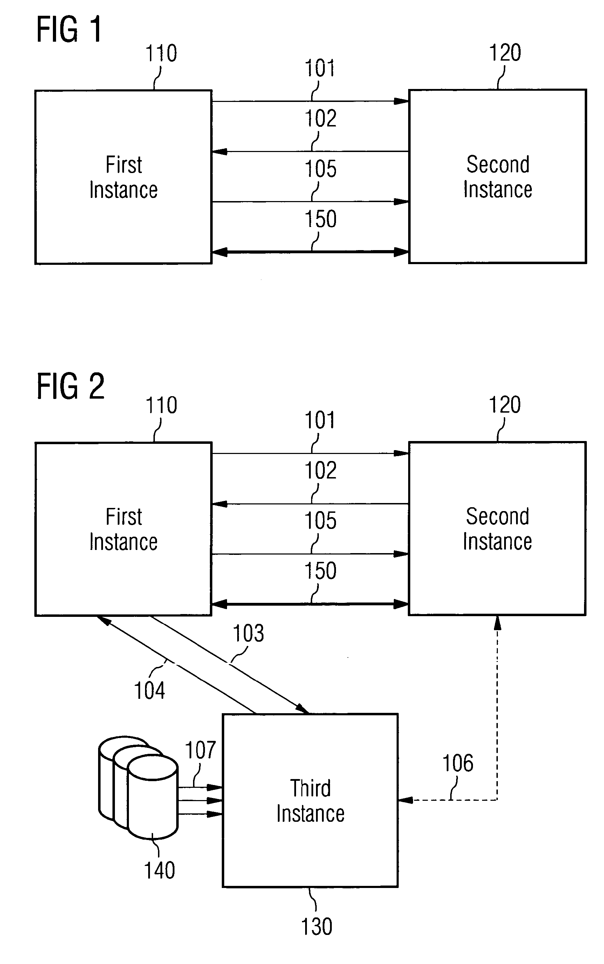

**Fig.1** shows a block diagram comprising two instances that can be used for data communication.

A First Instance 110 sends a request 101 to a Second Instance 120. The Second Instance 120 sends a message 102 (as a response) comprising a policy. This policy indicates, e.g., what kind of information, data, level of confidence is required from the First Instance 110 to fulfill the request 101.

The First Instance 110 then sends a policy related information 105 to the Second Instance 120 and hence meets the policy set forth by the Second Instance 120 in its message 102.

As an example, meeting the policy of the Second Instance 120 by sending the policy related information 105, the First Instance 110 authenticates itself to the Second Instance 120. Subsequently, the Second Instance 120 may fulfill the request 101 of the First Instance 110 by providing information 150. This information 150 may relate to further data communication that is exchanged bilateral.

**Fig.2** shows the First Instance 110 and the Second Instance 120 according to Fig.1 in addition to a Third Instance 130.

Prior to sending the policy related information 105 to the Second Instance 120, the First Instance 110 sends a request 103 that is related to the policy required by the Second Instance 120 (sent via the message 102) to the Third Instance 130.

This may in particular become necessary if the Second Instance 120 indicates via its message 102 that a level of confidence is required that cannot be met by the First Instance 110 alone (e.g., the Second Instance 120 is not going to trust the First Instance 110 only because the First Instance 110 will tell the Second Instance 120 to do so). Hence, a trusted party (here: the Third Instance 130) is required for both the First Instance 110 and the Second Instance 120.

Accordingly, the Third Instance 130 produces a policy related information 104 upon receipt of the request 103 and sends it to the First Instance 110. The First Instance 110 forwards the policy related information to the Second Instance 120 via the message 105.

The policy related information 104 generated by the Third Instance 130 can be based on information 107 provided by at least one device management server 140 to the Third Instance 130. Such information 107 can relate to the particular device of the First Instance 110, e.g., a type of a cellular phone provided by a certain manufacturer, and/or at least one application running on the First Instance 110.

Furthermore, the Second Instance 120 can provide additional information 106 that is required to generate the policy related information 104 online or offline. Such information can also be stored in separate databases.

The policy related information can provide a token, an attribute, a certificate, a set of claims, a program to be run on the First Instance 110, parameters of a program to be run on the First Instance 110, information provided by the device management server 140 and/or information provided by the Second Instance 120.

As a particular embodiment, the First Instance 110 may be a terminal, in particular a mobile phone, the Second Instance 120 may be a service provider, wherein the First Instance 110 and the Second Instance are connected via a fixed network or via a wireless network. The Third Instance 130 may be a trust company that can be connected to the First Instance 110 and/or to the Second Instance 120 via a fixed network or via a wireless network.

It is to be noted that a network application may comprise a network of limited expansion like in Near Field Communication (NFC). Such a scenario can comprise a limited number of, e.g., two to three instances.

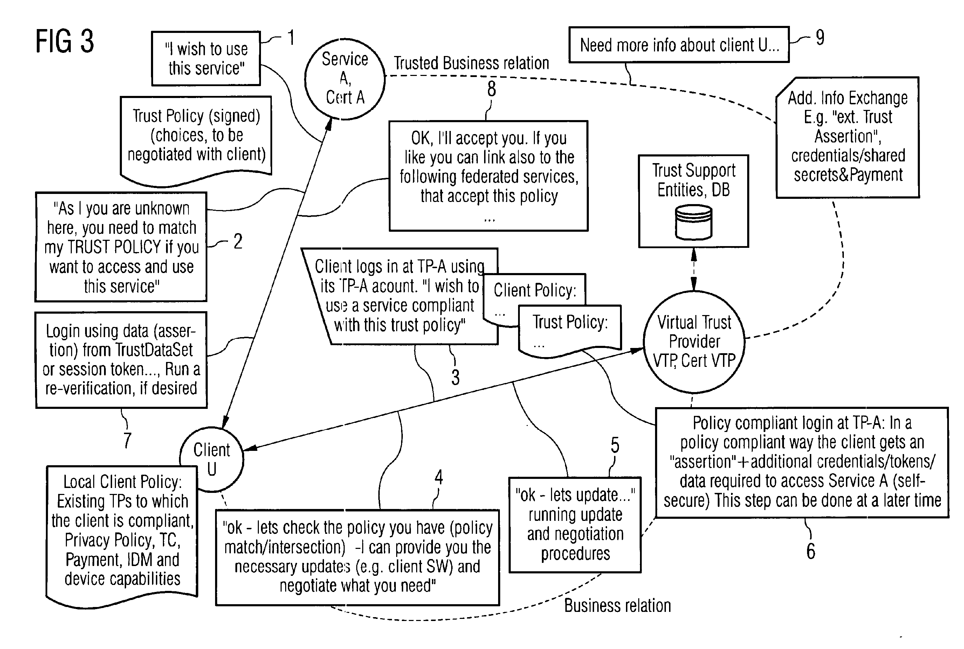

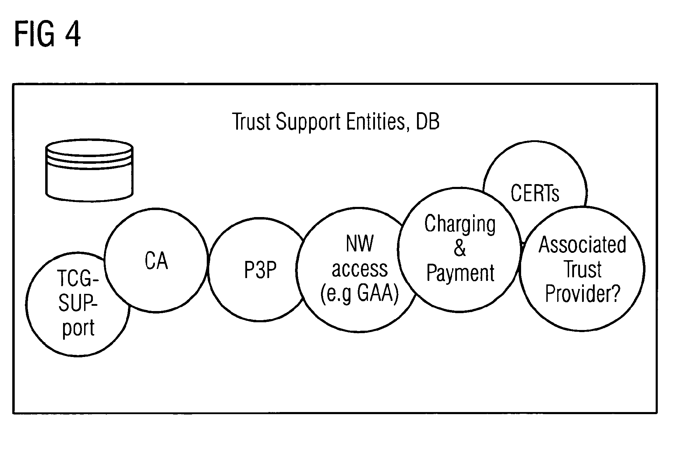

**Fig.3** shows an access control scheme according to one embodiment presented with this approach. Fig.3 shows how the Single Point of Trust (SPOT) is realized and that in a step 6 the client receives a token that federates the trust of different trust support entities (see Fig.4 as described below). In the following the concepts are explained.

### Assumptions

It is assumed, that a service or a provider possesses each at least one certificate (with a public key and a private key). This is used for secure messaging from the client to the server and to establish secure channels (e.g., via TLS) as well as for mutual authentication.

### Connecting

A user at a Client U wishes to connect to a Service A requiring access (1) for using that Service A. The Service A may be IP based and it is open to any client that is accepted. However, in order to become accepted, several conditions have to be met.

### Trust Policy

These conditions are expressed in terms of a so-called trust policy provided by the Service A after the Client U is connecting (2).

The Trust Policy is security related and should preferably be protected in a suitable manner, e.g. by a signing mechanism. The policy includes the following aspects (but is not restricted to these) that must be negotiated between the Client U and the Service A.

As an alternative, the Client U may offer an existing policy to which it is compliant and the Service A can decide whether to accept it or to start the negotiation process as set forth.

### ■ Client software required for connection

The Service A requires software to be available and to be run on the Client U.

This may be a security related issue (e.g. prescribing a certain runtime environment like a trusted browser and/or a trusted standard software). It may also be a service specific issue, as the Service A (or an affiliated (preferably trusted) third party) may provide a piece of (trusted) software itself (e.g. an trusted ordering, communication or payment module) for policy compliance to be run on the Client U.

The Service A may also accept user preferences as well as alternatives thereto (e.g., a favorite browser at the Client U) if this is policy compliant.

### ■ Trust Level (TL)

The Service A provides information of the level of trust associated with a level of confidence that is expected from the Client U.

This may include configuration of the client, active client state during service communication, security capabilities, patch level of the client software, presence of local Intrusion Detection/Prevention (IDS/IDP) tools running at the client, or other client capabilities that do not need to be directly trust relevant itself (e.g., enabled protocols, CPU speed, QoS parameters). However such capabilities are preferably revisable and they should be reported in a trusted manner.

The trust level can be a predefined value (e.g., known by the trust provider or any other trusted external entity). It may also be described by a trust level specification.

### ■ Trust Level (TL) Specification

A trust level specification can be provided in a formalized and/or exchangeable manner, e.g., using an extensible markup language (XML).

Using trusted computing mechanisms may comprise preconditions (Remote Integrity Measurement Certificates (RIM-Cert) values describing expected software to be loaded into a device) and post-conditions (e.g., Integrity Measurement Values (IMV)) that may securely be reported by the Client U when being checked for allowance to the Service A.

### ■ Time Synchronization, Time Stamps

The Trust Policy may require specifications regarding trustworthiness or synchronization of the local time running at the Client U during its connection with the Service A.

Also, behavioral requirements can be expressed, e.g., a requirement to use time stamps when exchanging messages with the Service A.

### ■ Accept mode

Upon connection, the Client U may be directly accepted by the Service A. This case is of relevance when using trusted computing mechanisms. In accordance with the accept mode the Service A can specify the mechanisms to be used when connecting, e.g., Attestation, REL-token, reverification, certificates, validity periods, sealed-credentials, token, shared secret, etc.

In principle, there are several alternatives:
a) The Client U is prepared and already checked by another instance, e.g., a Virtual Trust Provider VTP, thereby equipping the Client U with suitable tokens, certificates or credentials that have to be forwarded to the Service A when connecting.
   The Service A trusts the credentials or information generated by the Virtual Trust Provider VTP, but it may also ask the Virtual Trust Provider VTP for further detail or additional verification.
b) The Service A itself checks the Client U upon connection. Such inspection may be advantageously prepared by the Virtual Trust Provider VTP (e.g., via remote device management).

Moreover, the Virtual Trust Provider VTP may support verification (e.g., provide the expected verification values) to leverage TCG based mechanisms.

### ■ ID type

The Service A may set ID type(s) that the Client U has to provide during authentication and/or attestation (Examples: device ID, user ID, used of anonymity and of pseudonyms, AIKs).

### ■ Authentication mode

The Service A may specify as how the client has to be authenticated at the Virtual Trust Provider VTP for service access preparation (3GPP network/xSIM, using Generic Authentication Architecture GAA, using TCG attestation, RIM GA/AIK, Web, Certificate, password, etc.)

### ■ Charging and payment mode

The Service A specifies as how charging and payment should be considered. This allows setting up a respective payment scheme for the Client U using the Service A.

### ■ Privacy

Platform for Privacy Preferences P3P related issues can also be covered.

### ■ Authorization

If the Service A needs authorizations (e.g. specific rights to access the Client U and/or payment guarantees from the Client U it can be specified what kind of information to be used and as how to implement the authorization mechanism (e.g., using REL-Token, using service specific mechanisms, using XACML technology, etc.). Also contracts or negotiation terms may be,subject to a policy.

### Local Client Policy

The Client U may have its own (local) policies (there can be different ones, e.g., depending on a system state) that may match the issues related to server policies and extensions that are user or client specific.

In particular, such extensions may cover device capabilities (security, trust, protocols, etc.), user privacy (use of anonymity) and federation attributes (which attributes are enabled for federation, and which are not).

### Policy Negotiation and Resolution

The access control mechanisms to be applied can be negotiated between the involved business partners using "trust and privacy policies" expressing their respective expectations that may be measured and managed by specialized entities via the Virtual Trust Provider VTP.

After sending the policy to the Client U, the Client U connects to the Virtual Trust Provider VTP (a selection of the Virtual Trust Provider VTP may be chosen by the Client U) for policy negotiations and preparations (3).

At the Virtual Trust Provider VTP, the Client U is known, a business relationship between the Virtual Trust Provider VTP and the Client U had preferably established before such connection. Such a business relationship may be based on, e.g., a contract and an initial subscription that allows the Client U to be authenticated by the Virtual Trust Provider VTP.

As described above, the Client U may have its own local policy to express its own level of confidence required (e.g., a user privacy of the Client U). Such local policy of the Client U may also comprise capabilities of enablement and/or compatibilities and/or compliances. The local policy of the Client U may be sent to the Virtual Trust Provider VTP together with the policy of the Service A.

Next, the Virtual Trust Provider VTP checks, if the different policies (of the Service A as well as of the Client U) can be matched and/or combined (4). The Virtual Trust Provider VTP also decides what to do if there is no match. One solution to solve such mismatch is an update of the Client U via remote management. Alternatively, or in addition the Virtual Trust Provider VTP may communicate with the Service A in order to find an appropriate solution of said mismatch.

As a further alternative, the Service A can be updated to be compliant with the negotiated policy.

If necessary, the Virtual Trust Provider VTP can initiate and operate remote device management procedures (5) to make the device policy compliant. This step may preferably be based on trusted computing mechanisms. Also, such security mechanisms negotiated for the Service A can be set up in this step (5), i.e. token, certificates, binding and sealing mechanisms, security pre-requisites, etc. may be determined.

The Virtual Trust Provider VTP supplies the Client U with a set of assertions, tokens or the like that meets the policy as set forth by and/or (to be) negotiated with the Service A.

### Authentication, Client Checking and Setup

In the next step (6) that may be delayed or processed repeatedly, the Client U connects to the Virtual Trust Provider VTP under conditions (using the resulting policy) that have been negotiated for service access (by the Service A according to the example of shown in Fig.3; however, any other service trust policy could be subject to this phase).

The Client U obtains an assertion as a proof for successful identification, authentication and/or attestation (and other security checks that may be deemed necessary for authorization).

As an alternative, depending on a model of the Virtual Trust Provider VTP and depending on a (business) relationship between the Virtual Trust Provider VTP and the Client U, the Virtual Trust Provider VTP may equip the Client U with authorizations that can be transported via a REL token or implicitly via artefact/assertion mechanisms. If necessary, the Service A can (directly) contact the Virtual Trust Provider VTP.

### Service Access

Once equipped with all mechanisms and credentials and assertions/artefacts, the Client U can connect to the Service A in a step (7) according to the trust policy set forth by the Service A and/or the Client U.

The Service A may accept the Client U subsequent to a step (8). Such acceptance, however, may be subject to further checks. If the Client U provides an identity (pseudonym) generated by the Virtual Trust Provider VTP (to which the Client U has a registered account) it is up to the Service A to use this identity directly or to generate its own Identity Management (IDM) based on IDs and/or data generated and provided by the Virtual Trust Provider VTP (e.g., if there is a need to associate a delivery address for sold commodities or if the service wants to store the "payment behavior" of that identity).

Another issue for information exchanged between the Service A and the Virtual Trust Provider VTP can be summarized as follows: If an "hostile" user with a pseudonym requests another pseudonym for the same Service A, because its old account has been blocked, the Service A should be informed by the Virtual Trust Provider VTP comprising a message like: "User_1123 is now USER_XYV").

If the Client U is federated to other services it is up to this client's policy to decide whether to use the same or different IDs for each of these services.

It is also possible that the service access is completely anonymous. In this case, the Service A is confiding in the "assertion" alone (which is, e.g., particularly useful for one-time-transactions like, e.g., "This anonymous user has won a competition - please give him goods worth 20 EUR - I'll guarantee for the payment." - expressed by a REL-token sent within an assertion by the Service A).

It is up to the Service A to further accept this Client U only upon a preceding Virtual Trust Provider VTP check or to run an own login procedure with that Client U using its known IDs and trust values.
Example: In cases when subsequent to an initial xSIM based registration via the Virtual Trust Provider VTP only ID and PW are required, this kind of simplified login is feasible. If the Virtual Trust Provider VTP is needed for remote device management, e.g., for time synchronization purposes or for short-term credentials, the simplified login as stated before is not feasible.

### Trust Data Set, including Assertions for Service Access

The Virtual Trust Provider VTP (after checking the Client U) provides assertion, trust data and credentials needed for accessing the Service A by said Client U. The information provided by the Virtual Trust Provider VTP refers in particular to values and may comprise at least one of the following:
■ Session Token:
   value signed by the Virtual Trust Provider VTP, comprising in particular a validity period;
   The Session Token may always exist. It confirms that the signing Virtual Trust Provider VTP checked this Client U for service access and that there exists a policy compliant Trust Data Set. The session token may in particular be associated with an inherent use by time and date.
■ Trust Handle:
   shared secret, referring to a subsequent data set at the Virtual Trust Provider VTP and at the Client U;
   The Trust Handle may always exist. It is a shared secret between Client U and the Virtual Trust Provider VTP, used to uniquely identify the data set.
■ (pseudonym) User-ID;
■ (pseudonym) Device-ID;
■ Assertions or assertion-handles:
   transporting or referencing the "trust statement" confirmed by the Virtual Trust Provider VTP;
■ Credentials/Secrets (including value tokens);
■ Negotiated Policy;
■ Other data
   such as time synchronization information or time stamps, credit limits, hints from the Virtual Trust Provider VTP concerning the specific service (also the Virtual Trust Provider VTP could send references to policy compliant services);

### Information Exchange between the Service A and the Virtual Trust Provider VTP

The Service A is free to contact the Virtual Trust Provider VTP to get further information concerning, e.g., policy negotiation, assertion or any other additional information exchange between the Virtual Trust Provider VTP and the Service A (9). This includes trust information (such as Integrity Measurement Values (IMVs) if the Trust Policy required re-attestation at connect time, time synchronization values, credentials and shared secrets, federation data or payment/charging information).

In addition, information regarding possible security breaches, black listed clients, revocations etc. can be requested from the Virtual Trust Provider VTP. Underlying protocols need to ensure that the Virtual Trust Provider VTP itself does not become aware of the secrets that are shared between the Client U and the Service A only.

### Charging and Payment

Before, during (prepaid) or after (postpaid) the Service A is used by the Client U, this Service A can make use of the Virtual Trust Provider VTP for payment/charging support (9).

In this regard, the Service A can send charging records to the Virtual Trust Provider VTP that may forward it to the Mobile Network Provider or to any payment provider of the user's choice.

Payment modalities may also depend on the authorization the Client U obtained during the "Authentication, Client Checking and Setup" phase. For example, a REL token could transport a confirmed accounting information, stating "this Client U may consume services amounting to 5 EUR". Such accounting information can also be part of an assertion exchanged between the Virtual Trust Provider VTP and the Service A.

### Trust Support Entities and Databases

The Virtual Trust Provider VTP is referenced as "virtual", in particular because it technically acts as a Single-Point-of-Trust-Management (see above) for both, the Service A as well as the Client U.

The Virtual Trust Provider VTP may comprise and/or interact with several entities that are involved in policy based trust provisioning, privacy negotiation, charging and payment processes.

Entities that particularly relevant in this regard are
■ (Mobile) Network Operators (to support an initial authentication derived from a successful network access, e.g., via xSIM, GAA, SSC or IMS or via a fixed network);
■ certification authorities for certificate/PKI support (e.g., RIM authorization certificates and RIM certificates);
■ TCG support entities (providing TCG compliant mechanisms and information to integrate trusted computing mechanisms, RIM enabled software);
■ Platform for Privacy Preferences (P3P) for privacy policy support;
■ Certificates (CERTs) for device and software vulnerability support, charging and payment providers;
■ other (associated) Virtual Trust Providers (VTPs) (e.g., in roaming or cross domain scenarios).

Reference is made to **Fig.4** for further illustration purposes in this regard.

### Trust Federation

The policy based service access control scheme shown in Fig.3 can be extended by trust federation mechanisms as indicated. There are different ways to accomplish a result as principles to be applied preferably depend on user preferences and policies negotiated with federated services.

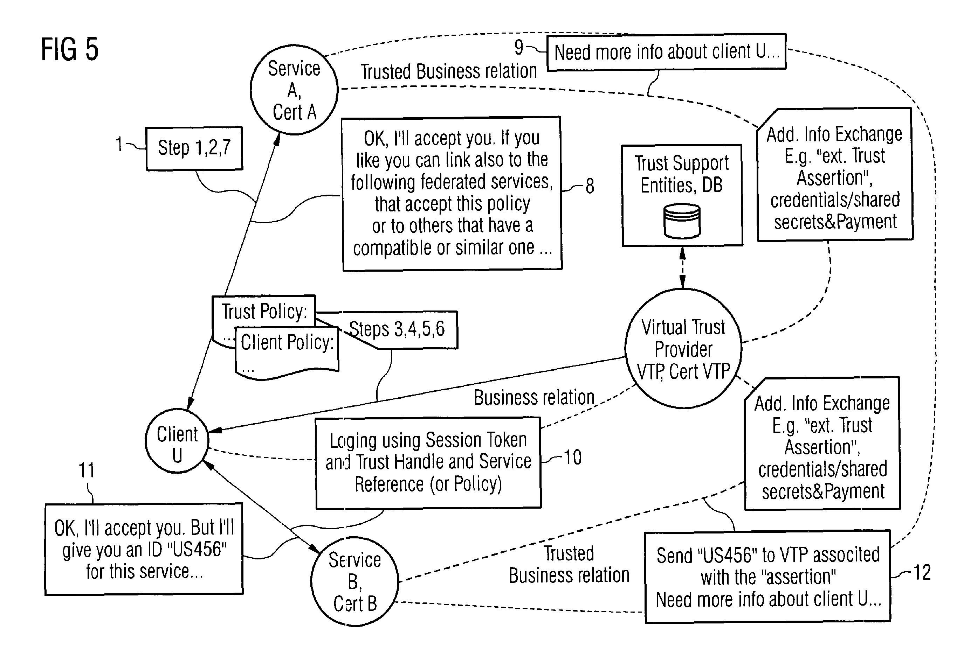

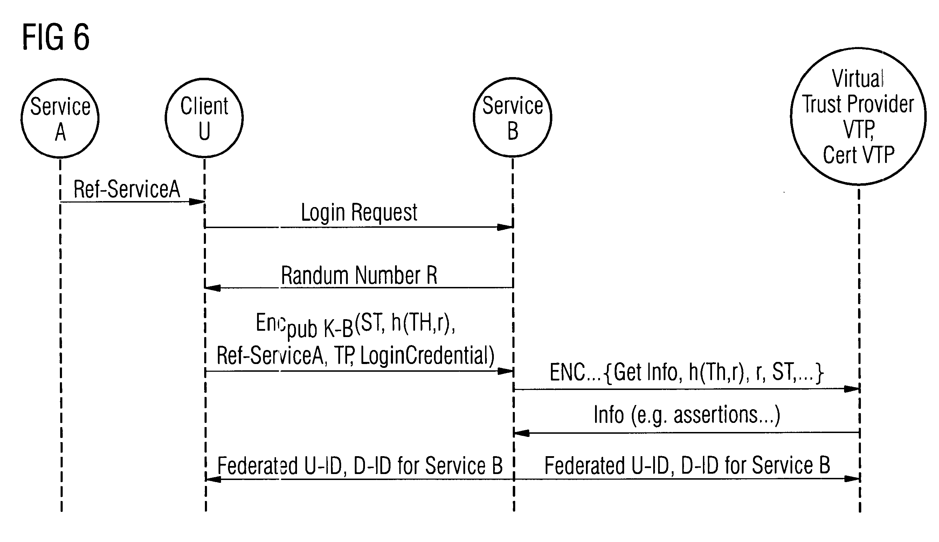

One scheme of trust federation is shown in **Fig.5** and in **Fig.6****.**

After being accepted by the Service A, the Client U is linked to a Service B. In this example, the Client U does not want its VTP-ID to be shared with the Service B and hence Client U only shows Service B its reference to Service A (privacy: optional signed token from Service A), the resulting Trust Policy TP, the Session Token ST, as well as the hashed Trust Handle TH. This is visualized in step (10) of Fig.5.

The login at the Service B can be done as described by the following message sequence:
Enc_{pubK-B} (ST, h(TH,r), Ref-ServiceA, TP, LoginCredentials)

Subsequently, the Service B knows, that the Client U is confirmed by the Service A, has an accepted Trust Policy (that the Service B can re-check) and that all the conditions given in the Trust Policy have already been checked by the Virtual Trust Provider VTP. "Ref-ServiceA" can contain any data from the Service A (e.g., a recommendation, value points, daily credit limits, etc.), but it may in particular be data that is comprehensible to the Client U (e.g., for privacy policy checks) .

The Service B trusts these simplified login procedure, but may optionally directly ask the Virtual Trust Provider VTP for additional information (as far as this is allowed by the privacy policy). As described above, the Client U can get an identity/pseudonym that is specific for the Service B. This is also sent to the Virtual Trust Provider VTP to prevent possible misuse by multiplied IDs (that may be used for bypassing black lists).

### Example: Anonymous payment via "Service invoked home-banking"

A service accepting a user (under a pseudonym or anonymously) has a contract with this user's bank. However, the service does not know the user's real identity, e.g., its name.

For payment purposes, the user federates his service ID and his trust data directly to his bank and obtains a prefilled form that is linked to the user's bank account (the effect is similar to home-banking directly triggered by a service payment function). The payment itself is done via an anonymous account held by the bank with a reference to the user's service pseudonym (the Virtual Trust Provider VTP helps for ID resolution) together with a confirmation that the real user's account now has been charged.

The service cannot discover the identity of the user. In addition, the bank does not know what this user (who is known there) has bought. The trust data helps to secure this kind of transaction.

The approach provided herewith combines several methods and infrastructures in a unified approach. This allows a service/user-controlled integration of network-agnostic access control, trusted computing mechanisms, federation and privacy principles, unified policy negotiation, remote device management, and trust federation, based on user and device IDs.

The following advantages are in particular apparent:
■ The mechanisms and roles described (e.g., Virtual Trust Provider VTP, trust support entities) enable innovative business models for so called Trust Companies (Trust-Cos).
■ An integration of trust values and/or tokens in a (business) process and/or negotiation between parties (instances) is supported, thereby allowing to integrate charging and payment.
■ By trust management an integration of (mobile) network operators and service providers (e.g. by integrating payment/charging) is supported. Also, risk management, e.g. in case of stolen or abused devices, is enhanced.
■ This approach leverages, generalizes and enhances service access control, making it independent from underlying network dependent mechanisms (network agnostic).
■ An introduced "Trust Data Set" extends and complements "assertions" containing only authorization and authentication information in a more generalized view with regard to "trust". Hence, trusted computing and device related issues (device integrity, device IDs) can be combined with a federation context.
■ The mechanism introduced relies on message exchange or on tokens and can be implemented fairly independent from specific protocols (e.g., HTTP).
■ By Trust Policy negotiation this approach allows a service emphasized compliance of access control conditions and at same time it respects user preferences, privacy, and device capabilities.
■ This approach further provides SSO mechanisms for trust aware services.
■ Furthermore, service composition is supported, as a connected service can be federated and can use a trusted SSO with the same Trust Policy.
■ Unified use of policies is an issue that is also solved by the access mechanisms introduced herewith.

## Claims

1. A method for data communication between a first instance and a second instance comprising the steps:
- the first instance sends a request to the second instance;
- the second instance sends a response comprising a policy;
- the first instance sends a policy related information to the second instance.

2. The method according to claim 1 further comprising the step:
- the second instance responds according to the request sent by the first instance.

3. The method according to any of the preceding claims, wherein the policy related information comprises a level of confidence that is required by the second instance to act according to the request sent by the first instance.

4. The method according to claim 3, wherein the level of confidence is provided by an user of the first instance.

5. The method according to any of claims 3 or 4, wherein the level of confidence is provided by the first instance itself.

6. The method according to any of the preceding claims comprising prior to the first instance sending the policy related information the steps:
- the first instance send a request that is related to the policy sent by the second instance to a third instance;
- the third instance provides the policy related information to the first instance.

7. The method according to claim 6, wherein the policy related information comprises at least one of the following:
- a token;
- an attribute;
- a certificate;
- a set of claims;
- a time, in particular a time stamp;
- a program to be run on the first instance;
- parameters of a program to be run on the first instance;
- information obtained from at least one device management server that is associated with the third instance;
- information provided by the second instance offline and/or online.

8. The method according to any of claims 6 or 7, wherein the third instance is a trusted party to the first instance and to the second instance.

9. The method according to any of claims 6 to 8 comprising the step:
- the first instance sends data comprising a policy to be met by the second instance.

10. The method according to any of claims 6 to 9, wherein the policy related information comprises information provided by the third instance.

11. The method according to any of claims 6 to 10, wherein the policy related information comprises information provided by the third instance without revealing any information of the identity of the first instance.

12. The method according to any of claims 6 to 11, wherein the third instance is a trusted entity, in particular a trust company or a trust center.

13. The method according to any of claims 6 to 12, wherein the response sent by the second instance comprises data provided by the third instance.

14. The method according to any of claims 6 to 13, wherein the policy related information provided by the third instance is provided by at least one further instance.

15. The method according to any of claims 6 to 14, wherein the first instance is reconfigured according to the policy related information obtained by the third instance.

16. The method according to any of the preceding claims, wherein the first instance and/or the second instance can be of the following type:
- a smart card;
- a chip card;
- a user equipment;
- a user terminal;
- a mobile phone;
- a machine setup and left at a location by a user;
- a mobile computer;
- a personal digital assistant;
- a computer connected to a wired or wireless network;
- an IP telephone.

17. The method according to any of the preceding claims, wherein the first instance or second instance is a producer of a service, in particular a provider.

18. The method according to any of the preceding claims, wherein the method is used to conclude a bargain between the first instance and the second instance.

19. A device comprising at least one processor unit that is arranged such that the method according of any of the preceding claims is executable on said at least one processor.

20. The device according to claim 19, wherein said device is a communication device, in particular a device of the following type:
- a smart card;
- a chip card;
- a user equipment;
- a user terminal;
- a mobile phone;
- a machine setup and left at a location by a user;
- a mobile computer;
- a personal digital assistant;
- a computer connected to a wired or wireless network;
- an IP telephone.

21. Communication system comprising the device according to any of claims 19 to 20.
